# EUROPEAN PATENT APPLICATION

(11) **EP 2 106 203 A2**
(43) Date of publication of application: **30.09.2009**
(21) Application number: 09250865.4
(22) Date of filing: 26.03.2009
(51) Int. Cl.: H05B 41/38

(54) **Dimmable fluorescent lamp ballast**

(30) Priority: 28.03.2008 CN 200810089829
(71) Applicant: Mass Technology (H.K.) Ltd., Kowloon, Hong Kong (HK)
(72) Inventor: Foo, Onn Fah, Kowloon (HK)
(74) Representative: Prentice, Raymond Roy

(57) **Abstract**

A dimmable fluorescent lamp ballast comprises a filter and rectifier circuit (1) connected to a main power source, a stepped dimming sampling circuit, a linear and stepless dimming sampling circuit, and a dimming control circuit (7). The dimming control circuit (7) comprises a stepped dimming module (3), a linear and stepless dimming module (2), a switch (4) and a circuit controller (6), wherein the switch (4) is selectively connecting the stepped dimming module (3) or the linear and stepless dimming module (2) to the circuit controller (6) respectively. The present invention integrates both functions of stepped dimming and linear and stepless dimming into one fluorescent lamp ballast. According to the present invention, either the linear and stepless dimming of or the stepped dimming of the fluorescent lamp can be effected readily by a silicon controlled rectifier dimmer or a power switch when necessary.

## Description

The present invention relates to a dimmable fluorescent lamp ballast and, more particularly, to a fluorescent lamp ballast for linear and stepless dimming or stepped dimming of a fluorescent lamp using a currently available silicon controlled rectifier dimmer or a power switch.

On many occasions, there are needs for light dimming. However, a fluorescent lamp is a nonlinear load and exhibits a negative resistance characteristic such that dimming of the fluorescent lamp is difficult using a common silicon controlled rectifier dimmer. Chinese patent application CN1,722,929A (application number: 200410100898.6) of the present Applicant has disclosed a fluorescent lamp electronic ballast, using a silicon controlled rectifier dimmer to carry out linear and stepless dimming of the fluorescent lamp. The Applicant's Chinese patent application CN1,694,597A (application number: 200510072474.8) has disclosed a fluorescent lamp ballast for stepped dimming by either identifying a repeated alteration of dimming phase-angle of the silicon controlled rectifier dimmer or by identifying continuous switchings of the power switch.

The above dimmable fluorescent lamp ballasts of the present Applicant have solved the technical problems associated with the dimming of fluorescent lamps in the art. But these fluorescent lamps are either used for the purpose of stepped dimming only, or used for the purpose of linear and stepless dimming only. This drawback has resulted in limited applications of dimmable fluorescent lamps.

It is an aim of the present invention to provide a fluorescent lamp ballast, which is capable of carrying out linear and stepless dimming and stepped dimming. Thus, the dimmable fluorescent lamp ballast can find a wide range of applications.

In order to solve the above technical problems, the dimmable fluorescent lamp ballast of the present invention comprises a filter and rectifier circuit connected to a main power source and having an output terminal Vrect, **characterised in that** the ballast further comprises a stepped dimming sampling circuit, a linear and stepless dimming sampling circuit which has a first output terminal and a second output terminal, and a dimming control circuit;
the dimming control circuit comprises a stepped dimming module, a linear and stepless dimming module, a switch and a circuit controller for controlling the fluorescent lamp, wherein the switch is selectively connecting the stepped dimming module or the linear and stepless dimming module to the circuit controller respectively, the switch having one common terminal connected to an input terminal of the circuit controller, one terminal connected to an output terminal of the stepped dimming module, and another terminal connected to an output terminal of the linear and stepless dimming module.

Preferably the stepped dimming sampling circuit comprises a resistor and a capacitor connected in series, the resistor having the other terminal connected to the output terminal of the filter and rectifier circuit, the capacitor having the other terminal connected to earth, the stepped dimming sampling circuit having an output terminal where the resistor is connected to the capacitor and which is connected to an input terminal of the stepped dimming module.

According to a preferred embodiment of the invention, the linear and stepless dimming sampling circuit comprises first, second and third resistors connected to one another in series, and a capacitor connected in parallel to the third resistor, the first resistor having the other terminal connected to the output terminal of the filter and rectifier circuit, the third resistor and the capacitor having the respective other terminals connected to earth, wherein the first resistor is connected to the second resister at the first output terminal of the linear and stepless dimming sampling circuit, the second resistor is connected to the third resister at the second output terminal of the linear and stepless dimming sampling circuit, and the first output terminal and the second output terminal are connected to an input terminal of the linear and stepless dimming module.

The stepped dimming module preferably comprises a comparator, a counter, a decoder and a plurality of resistors, the comparator having one input terminal connected to the output terminal of the stepped dimming sampling circuit, another input terminal for setting a first voltage, and one output terminal connected to an input terminal of the counter which has an output terminal connected to an input terminal of the decoder which has output terminals connected to terminals of the plurality of resistors respectively, the other terminals of the plurality of resistors being connected to one another and jointly connected to one terminal of the switch.

Preferably the linear and stepless dimming module comprises a voltage detection circuit, a threshold voltage circuit and a peak voltage detection adapter, wherein the voltage detection circuit has an input terminal connected to the first output terminal of the linear and stepless sampling circuit, and an output terminal for controlling the connection of the switch to the stepped dimming module or the linear and stepless dimming module, the threshold voltage circuit has an input terminal connected to the second output terminal of the linear and stepless dimming sampling circuit, and an output terminal connected to an input terminal of the peak voltage detection adapter which has an output terminal connected to another terminal of the switch.

The input terminals of the switch and the circuit controller are preferably connected to a first resistor and to a second resistor, respectively; the first resistor having the other terminal connected to earth and the second resistor having the other terminal for setting a second voltage.

According to a preferred embodiment of the invention, the circuit controller comprises a comparator having an input terminal connected to one terminal of the switch and the other input terminal connected to earth via a resistor.

According to the invention, the dimmable fluorescent lamp ballast integrates a linear and stepless dimming fluorescent lamp circuit and a stepped dimming fluorescent lamp circuit into one single dimmable fluorescent lamp ballast, and is able to switch between the linear and stepless dimming module and the stepped dimming module by use of a switch. Linear and stepless dimming or stepped dimming of the fluorescent lamp can be carried out expediently by a silicon controlled rectifier dimmer or a power switch to satisfy different dimming requirements.

Further details of the invention will be explained with reference to the drawings, in which:-
- Fig. 1: is a schematic diagram of a circuit of a dimmable fluorescent lamp ballast of the present invention;
- Fig. 2: is a schematic diagram showing a section of a stepped dimming circuit of a dimmable fluorescent lamp ballast of the present invention; and
- Fig. 3: is a schematic diagram showing a section of a linear and stepless dimming circuit of a dimmable fluorescent lamp ballast of the present invention.

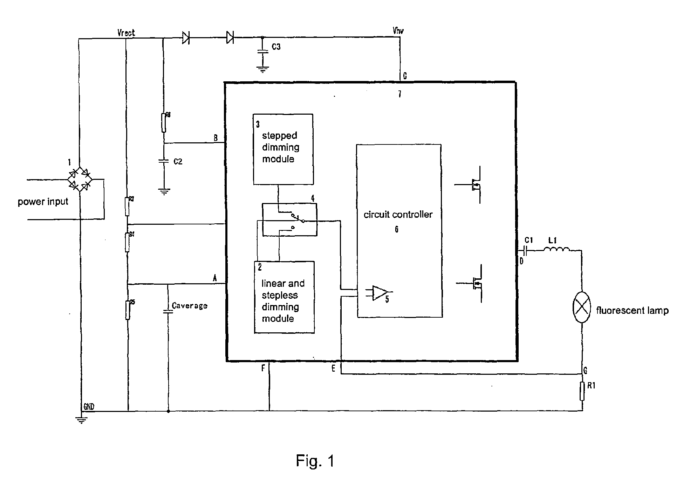

Fig. 1 illustrates a dimmable fluorescent lamp ballast of the present invention, which comprises a filter and rectifier circuit 1 connected to a main power source and having an output terminal Vrect. The ballast further comprises a stepped dimming sampling circuit, a linear and stepless dimming sampling circuit, and a dimming control circuit 7.

The dimming control circuit 7 comprises a stepped dimming module 3, a linear and stepless dimming module 2, a switch 4 and a circuit controller 6 for controlling the fluorescent lamp, the switch 4 is selectively connecting the stepped dimming module 3 or the linear and stepless dimming module 2 to the circuit controller 6 respectively.

The stepped dimming sampling circuit comprises a resistor R6 and a capacitor C2 connected in series. The resistor R6 has the other terminal connected to the output terminal of the filter and rectifier circuit 1. The capacitor C2 has the other terminal connected to earth. The stepped dimming sampling circuit has an output terminal where the resistor R6 is connected to the capacitor C2 and which is connected to an input terminal of the stepped dimming module 3.

The linear and stepless dimming sampling circuit comprises resistors R3, R4 and R5 connected to one another in series, and a capacitor Caverage connected in parallel to the resistor R5. The resistor R3 has the other terminal connected to the output terminal of the filter and rectifier circuit 1, and the resistor R5 and the capacitor Caverage have the respective other terminals connected to earth. The resistors R3 and R4 are connected to one another at the first output terminal of the linear and stepless dimming sampling circuit, the resistors R4 and R5 are connected to one another at the second output terminal of the linear and stepless dimming sampling circuit, and the first output terminal and the second output terminal are connected to an input terminal of the linear and stepless dimming module 2.

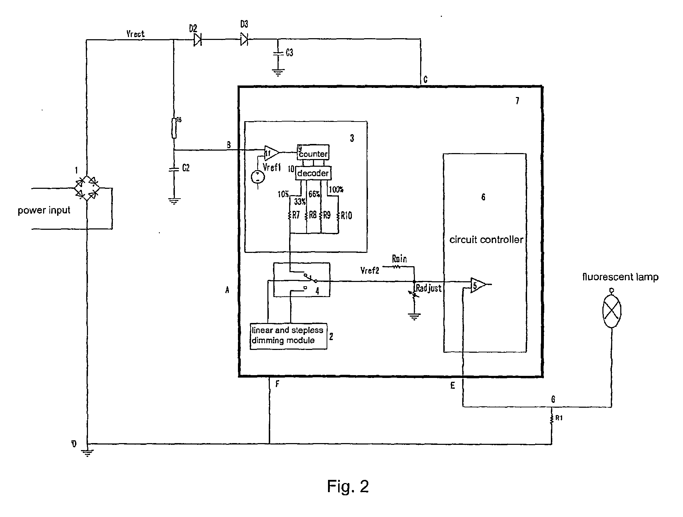

As shown in Fig. 2, the stepped dimming module 3 comprises a comparator 11, a counter 9, a decoder 10 and resistors R7, R8, R9 and R10. The comparator 11 has one input terminal connected to the connection of the resistor R6 and the capacitor C2, another input terminal for setting a first voltage, and one output terminal connected to an input terminal of the counter 9. The counter 9 has an output terminal connected to an input terminal of the decoder 10 which has output terminals connected to the resistors R7, R8, R9 and R10 respectively, and the other terminals of the resistors R7, R8, R9 and R10 are connected to one another and jointly connected to the one terminal of the switch 4.

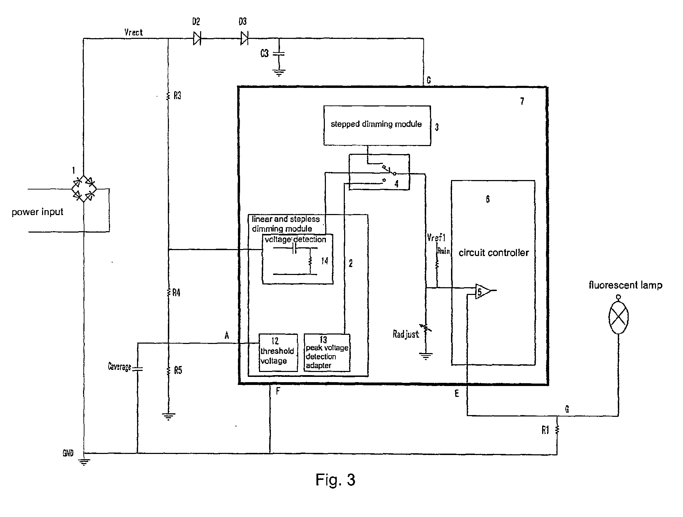

As shown in Fig. 3, the linear and stepless dimming module 2 comprises a voltage detection circuit 14, a threshold voltage circuit 12 and a peak voltage detection adapter 13. The voltage detection circuit 14 has an input terminal connected to the connection of the resistors R3 and R4, and an output terminal for controlling the connection of the switch 4 to the stepped dimming module 3 or to the linear and stepless dimming module 2. The threshold voltage circuit 12 has an input terminal connected to the connection of the resistors R4 and R5, and an output terminal connected to an input terminal of the peak voltage detection adapter 13. The peak voltage detection adapter 13 has an output terminal connected to another terminal of the switch 4.

Figs. 2 and 3 illustrate that the input terminals of the switch 4 and the circuit controller 6 are connected to a resistor Radjust and a resistor Rmin, respectively. The other terminal of the resistor Radjust is connected to earth, and the other terminal of the resistor Rmin is used for setting a second voltage.

The circuit controller 6 comprises a comparator 5. The comparator 5 has an input terminal connected to one terminal of the switch 4, and the other input terminal connected to earth via a resistor R1.

Luminous flux of the fluorescent lamp is determined by the current flowing through the fluorescent lamp tube. An E pin of the comparator 5 of the circuit controller 6 is connected to the resistor R1 and one terminal of the lamp tube at point G. The resistor R1 has the other terminal connected to a common ground GND of the ballast. The resistor R1 detects the current of the fluorescent lamp tube. The E pin of the comparator 5 detects a voltage across the two terminals of the resister R1, and then compares it with the voltage across the common terminal of the switch 4, thereby changing the current magnitude. As a result, the luminous flux of the fluorescent lamp can be changed to give out the dimming effect.

In the case of stepped dimming, Fig. 2 illustrates that switching the power switch results in the alteration of the states of the voltage Vrect, and thus in the alteration of various operation modes of the fluorescent lamp. The Voltage Vrect would be varied momentarily with a progressively varied voltage generated at point B, every time the power is switched on again after being switched off.

The comparator 11 of the stepped dimming module detects the alteration of the voltage generated at point B and compares it with the set first voltage Vref1, and then converts the voltage alteration after comparison into a pulse signal which is outputted to the counter 9. The comparator 11 outputs a pulse signal for every detection of the voltage alteration at point B. This output of the counter 9 depends on the inputted pulse signal, while the pulse signal outputted from the comparator 11 depends on the number of power switching, and therefore, the output signal of the counter 9 can be determined by the number of the power switching. The output signal of the counter 9 is inputted to the decoder 10 that determines which one of the resistors R7, R8, R9 and R10 is connected individually to the decoder based on the number of the power switching. The resistors R7-R10 are connected to an adjusting resistor Radjust via the switch 4 to determine how much the current from the comparator 5 is outputted, and thus determining how much the current (i.e. the luminous flux of the fluorescent lamp) flowing through the fluorescent lamp is.

The number of the pulses received by the counter 9 is used to determine the number of the power switching, so that the decoder 10 selects one of the resistors R7-R10 for the electrical connection with it. In this way, the operation mode of the fluorescent lamp is changed to effect the stepped dimming. In this embodiment, 4 steps of dimming are illustrated, and 2-10 steps of dimming are possible when desirable.

In the case of linear and stepless dimming, Fig. 3 illustrates that a variation in the conduction angle of the silicon controlled rectifier (not shown) would change a sine wave signal at the power input terminal of the filter and rectifier circuit 1. The sine wave signal is rectified by the filter and rectifier circuit to a direct voltage Vrect. The direct high voltage Vrect is divided through the resistors R3, R4 and R5 to obtain a stable direct voltage at the capacitor Caverage. The magnitude of this direct voltage depends on how much the phase-angle converted by the silicon controlled rectifier dimmer is. The alteration in the voltage across the resistor R4 caused by converting the phase-angle of the silicon controlled rectifier dimmer is detected by a differential circuitry of the voltage detection circuit 14. When there is such a variation detected by the voltage detection circuit 14, the switch 4 would be connected to the linear and stepless dimming module which then starts to work.

The voltage across the capacitor Caverage is inputted to the linear and stepless dimming module 2, and then compared with the voltage set by the threshold voltage circuit 12. With the peak voltage detection adaptor 13, the resultant voltage difference would be decreased to a suitable voltage by means of the resistor Radjust. The minimum voltage across the resistor Radjust is determined jointly by the set second voltage Vref2 and the resistor Rmin.

## Claims

1. A dimmable fluorescent lamp ballast, comprising a filter and rectifier circuit (1) connected to a main power source and having an output terminal (Vrect), **characterised in that** the ballast further comprises a stepped dimming sampling circuit, a linear and stepless dimming sampling circuit which has a first output terminal and a second output terminal, and a dimming control circuit (7);
the dimming control circuit (7) comprises a stepped dimming module (3), a linear and stepless dimming module (2), a switch (4) and a circuit controller (6) for controlling the fluorescent lamp, wherein the switch (4) is selectively connecting the stepped dimming module (3) or the linear and stepless dimming module (2) to the circuit controller (6) respectively, the switch (4) having one common terminal connected to an input terminal of the circuit controller (6), one terminal connected to an output terminal of the stepped dimming module (3), and another terminal connected to an output terminal of the linear and stepless dimming module (2).

2. A dimmable fluorescent lamp ballast according to claim 1, **characterised in that** the stepped dimming sampling circuit comprises a resistor (R6) and a capacitor (C2) connected in series, the resistor (R6) having the other terminal connected to the output terminal of the filter and rectifier circuit (1), the capacitor (C2) having the other terminal connected to earth, the stepped dimming sampling circuit has an output terminal where the resistor (R6) is connected to the capacitor (C2) and which is connected to an input terminal of the stepped dimming module (3).

3. A dimmable fluorescent lamp ballast according to claim 1 or claim 2, **characterised in that** the linear and stepless dimming sampling circuit comprises a first resistor (R3), a second resistor (R4) and a third resistor (R5) connected to one another in series, and a capacitor (Caverage) connected in parallel to the third resistor (R5), the first resistor (R3) having the other terminal connected to the output terminal of the filter and rectifier circuit (1), the third resistor (R5) and the capacitor (Caverage) having the respective other terminals connected to earth, wherein the first resistor (R3) is connected to the second resistor (R4) at the first output terminal of the linear and stepless dimming sampling circuit , the second resistor (R4) is connected to the third resistor (R5) at the second output terminal of the linear and stepless dimming sampling circuit, and the first output terminal and the second output terminal are connected to an input terminal of the linear and stepless dimming module (2).

4. A dimmable fluorescent lamp ballast according to any one of the preceding claims, **characterised in that** the stepped dimming module (3) comprises a comparator (11), a counter (9), a decoder (10) and a plurality of resistors (R7, R8, R9, R10), the comparator (11) having one input terminal connected to the output terminal of the stepped dimming sampling circuit, another input terminal for setting a first voltage, and one output terminal connected to an input terminal of the counter (9) which has an output terminal connected to an input terminal of the decoder (10) which has output terminals connected to terminals of the plurality of resistors (R7, R8, R9, R10) respectively, the other terminals of the plurality of resistors (R7, R8, R9, R10) being connected to one another and jointly connected to one terminal of the switch (4).

5. A dimmable fluorescent lamp ballast according to any one of the preceding claims, **characterised in that** the linear and stepless dimming module (2) comprises a voltage detection circuit (14), a threshold voltage circuit (12) and a peak voltage detection adapter (13), wherein the voltage detection circuit (14) has an input terminal connected to the first output terminal of the linear and stepless sampling circuit, and an output terminal for controlling the connection of the switch (4) to the stepped dimming module (3) or the linear and stepless dimming module (2), the threshold voltage circuit (12) has an input terminal connected to the second output terminal of the linear and stepless dimming sampling circuit, and an output terminal connected to an input terminal of the peak voltage detection adapter (13) which has an output terminal connected to another terminal of the switch (4).

6. A dimmable fluorescent lamp ballast according to any one of the preceding claims, **characterised in that** the input terminals of the switch (4) and the circuit controller (6) are connected to a first resistor (Radjust) and to a second resistor (Rmin), respectively; the first resistor (Radjust) having the other terminal connected to earth, and the second resistor (Rmin) having the other terminal for setting a second voltage.

7. A dimmable fluorescent lamp ballast according to any one of the preceding claims, **characterised in that** the circuit controller (6) further comprises a comparator (5) having an input terminal connected to one terminal of the switch (4), and the other input terminal connected to earth via a resistor (R1).
